# DEMANDE DE BREVET EUROPEEN

(11) **EP 0 901 184 A1**
(43) Date de publication de la demande: **10.03.1999**
(21) Numéro de dépôt: 98402125.3
(22) Date de dépôt: 27.08.1998
(51) Int. Cl.: H01Q 3/26, H04Q 7/34

(54) **Procédé de calibrage de chaînes de réception et/ou d'émission pilotant un réseau d'antennes actives, et station mobile correspondante**

(30) Priorité: 04.09.1997 FR 9711007
(71) Demandeur: ALCATEL, 75008 Paris (FR)
(72) Inventeur: Bursztejn, Jacques, 92200 Neuilly S/Seine (FR); Gourgue, Frédéric, 75017 Paris (FR)
(74) Mandataire: Smith, Bradford Lee

(57) **Abrégé**

L'invention concerne un procédé de calibrage de chaînes de réception et/ou d'émission pilotant un réseau d'antennes actives, ledit réseau d'antennes actives étant compris dans une station de base d'un système de radiocommunication numérique cellulaire du type à accès multiple à répartition spatiale (SDMA), et permettant de créer dynamiquement des faisceaux de réception et/ou d'émission en direction de stations mobiles présentes dans la cellule, dite cellule courante, associée à ladite station de base.

Selon l'invention, au moins une des stations mobiles présentes dans la cellule courante, dite station-sonde de calibrage, est utilisée, outre sa fonction classique, comme sonde de calibrage, de façon à recevoir et/ou émettre au moins un signal de test permettant ledit calibrage desdites chaînes de réception et/ou d'émission.

## Description

Le domaine de l'invention est celui des systèmes de radiocommunication numérique cellulaire, du type à accès multiple à répartition spatiale (ou SDMA, pour "Space Division Multiple Access" en anglais).

On rappelle que chaque station de base d'un tel système de radiocommunication comprend un réseau d'antennes actives (encore appelé "panneau d'antennes actives"). Ce dernier permet de créer dynamiquement et électroniquement des faisceaux (ou pinceaux) de réception et/ou d'émission en direction de stations mobiles présentes dans la cellule associée à la station de base. Un réseau d'antennes actives permet donc d'augmenter le gain en directivité et remplace l'unique antenne (ou les deux antennes, en cas de diversité) utilisée(s) auparavant dans une station de base d'un système de radiocommunication classique.

On rappelle également que chaque antenne du réseau d'antennes actives est pilotée (ou "attaquée") par une chaîne de réception, lorsqu'elle est utilisée en réception, et par une chaîne d'émission, lorsqu'elle est utilisée en émission. On notera qu'une même antenne du réseau peut être utilisée simultanément en émission et en réception, dès lors qu'elle est pilotée simultanément par une chaîne d'émission et une chaîne de réception.

Plus précisément, l'invention concerne un procédé de calibrage des chaînes de réception et/ou d'émission pilotant un tel réseau d'antennes actives.

La nécessité d'un tel calibrage est présentée ci-dessous, pour les chaînes d'émission, puis pour les chaînes de réception.

L'utilisation d'un réseau d'antennes actives en émission suppose l'exécution de deux étapes, à savoir : l'acquisition et la poursuite de la direction des stations mobiles à suivre, et la création des faisceaux dans la ou les direction(s) utile(s). L'étape d'acquisition et de poursuite se fait par traitement du signal, à partir des signaux reçus sur le réseau d'antennes actives. L'étape de création des faisceaux consiste à calculer les phases et amplitudes relatives requises en sortie des chaînes d'émission, pour attaquer chacune des antennes actives du réseau, de façon à créer les faisceaux souhaités.

Une implémentation préférentielle de ces chaînes d'émission consiste à réaliser des déphasages et atténuations en bande de base, c'est-à-dire avant les opérations de transposition en radiofréquence, de filtrage et d'amplification. Malheureusement, des rotations de phases et des gains ou atténuations, qui ne sont qu'imparfaitement contrôlés, interviennent au cours de ces opérations. En outre, les fonctions de transfert de deux chaînes d'émission pilotant chacune une antenne distincte n'ont aucune raison d'être identiques. Les différences entre deux chaînes d'émission peuvent être dues à des longueurs de câble inégales, des gains d'amplificateurs différents (et variables en fonction de la température), de la réponse amplitude/phase (AM-PM) des amplificateurs, etc. Les relations de phases et d'amplitudes réalisées en bande de base sont donc dégradées en sortie des chaînes d'émission (c'est-à-dire au niveau des antennes du réseau), ce qui dégrade la qualité de formation des faisceaux.

On comprend donc que la rotation de phase induite sur chaque chaîne d'émission doit être estimée afin de pouvoir être compensée. C'est précisément cette estimation que l'on appelle "calibrage des chaînes d'émission". De façon classique, le calibrage est effectué de manière relativement régulière (par exemple plusieurs fois par heure, par jour ou encore par semaine). Pour effectuer ce calibrage, un fonctionnement en boucle ouverte n'est pas réaliste et une mesure du champ effectivement rayonné est nécessaire.

La solution actuelle consiste à avoir un certain nombre de sondes (ou récepteurs de calibrage distants) dans la zone de couverture. Chaque sonde, dédiée à cette fonction de calibrage et située à un emplacement fixe, détermine localement le niveau de champ reçu. Cette solution actuelle présente l'inconvénient majeur d'être coûteuse car la présence d'équipements de test à demeure requiert la mise en place d'une logistique pour leur installation, leur maintenance et leur exploitation.

En ce qui concerne les chaînes de réception, le problème se pose de façon sensiblement identique. En effet, lors de l'utilisation d'un réseau d'antennes actives en réception, la phase relative des signaux reçus par le réseau d'antennes actives est perdue avant d'atteindre les détecteurs situés en aval des différentes chaînes de réception. Ceci est dû au fait que le signal radio qui atteint l'une des antennes du réseau traverse les différents éléments (filtres, amplificateurs, câbles, connecteurs, etc) constitutifs de la chaîne de réception de cette antenne avant d'arriver au détecteur correspondant. En d'autres termes, la phase du signal est modifiée le long de la chaîne de réception (également appelée "chemin de données"). La valeur de cette rotation de phase est modifiée lentement (par exemple du fait des variations de température) et n'est pas la même d'une chaîne de réception à l'autre.

Or, comme déjà expliqué ci-dessus, la précision de l'estimation de l'angle d'arrivée des signaux et la qualité de la formation des faisceaux dépendent des phases relatives entre antennes du réseau. La rotation de phase induite sur chaque chaîne de réception doit être estimée afin de pouvoir être compensée. C'est le "calibrage des chaînes de réception".

La solution actuelle, pour effectuer ce calibrage des chaînes de réception, consiste à utiliser un émetteur de calibrage distant, dédié à cette fonction de calibrage et situé à un emplacement fixe dans le champ. Cet emplacement doit être assez éloigné du réseau d'antennes actives (au moins 100 mètres pour les liaisons fréquentielles des systèmes cellulaires), de façon qu'une onde plane arrive sur le réseau d'antennes actives. L'azimuth de l'émetteur de calibrage distant étant connu, il est possible de déterminer la différence de phase entre les chaînes de réception, et donc le calibrage à effectuer (c'est-à-dire la compensation à appliquer) pour corriger l'estimation de l'angle d'arrivée et la formation des faisceaux.

Cette solution actuelle fonctionne bien, mais la présence d'un émetteur de calibrage distant, spécifique à cet usage et à un emplacement fixe dans le champ, présente plusieurs inconvénients, à savoir notamment : l'augmentation des coûts de maintenance, l'obligation de trouver et d'équiper un site pour cet émetteur de calibrage distant, et enfin la nécessité de disposer de moyens de transmission dédiés pour commander cet émetteur de calibrage distant.

L'invention a notamment pour objectif de pallier ces différents inconvénients de l'état de la technique.

Plus précisément, l'un des objectifs de la présente invention est de fournir un procédé de calibrage de chaînes de réception et/ou d'émission pilotant un réseau d'antennes actives, ce procédé étant simple à mettre en oeuvre et peu côuteux.

Ces différents objectifs, ainsi que d'autres qui apparaîtront par la suite, sont atteints selon l'invention à l'aide d'un procédé de calibrage de chaînes de réception et/ou d'émission pilotant un réseau d'antennes actives, ledit réseau d'antennes actives étant compris dans une station de base d'un système de radiocommunication numérique cellulaire du type à accès multiple à répartition spatiale, et permettant de créer dynamiquement des faisceaux de réception et/ou d'émission en direction de stations mobiles présentes dans la cellule, dite cellule courante, associée à ladite station de base,
caractérisé en ce qu'au moins une des stations mobiles présentes dans la cellule courante, dite station-sonde de calibrage, est utilisée, outre sa fonction classique, comme sonde de calibrage, de façon à recevoir et/ou émettre au moins un signal de test permettant ledit calibrage desdites chaînes de réception et/ou d'émission.

Le principe général de l'invention consiste donc à utiliser des stations mobiles (appelées "stations-sonde de calibrage" dans la suite de la description) comme sondes de calibrage des chaînes de réception et/ou d'émission.

Ainsi, la présente invention ne nécessite aucun matériel (ni émetteur ni récepteur de calibrage distant) dédié à la fonction de calibrage et situé à un emplacement fixe dans le champ. Par conséquent, son coût est fortement réduit par rapport aux solutions actuelles précitées.

En outre, l'opération de calibrage n'est pas gênante pour les utilisateurs des stations-sonde de calibrage puisqu'elle est effectuée de façon transparente vis-à-vis de ces derniers (par exemple pendant le mode veille).

Par ailleurs, le procédé de l'invention est simple à mettre en oeuvre puisqu'il nécessite simplement l'ajout de quelques fonctionnalités dans les stations mobiles utilisées comme sondes de calibrage.

Préférentiellement, ledit procédé est du type itératif, de façon à améliorer par itérations successives la précision dudit calibrage des chaînes de réception et/ou d'émission.

Dans le cas du calibrage des chaînes de réception, le procédé comprend, de façon avantageuse, les étapes suivantes :
- la station de base transmet à au moins une station-sonde de calibrage une demande d'émission d'au moins un signal de test prédéterminé ;
- à la réception de ladite demande d'émission, chaque station-sonde de calibrage concernée émet ledit au moins un signal de test ;
- la station de base reçoit et analyse ledit au moins un signal de test ;
- en fonction de l'analyse dudit au moins un signal de test, la station de base détermine le calibrage à effectuer sur les chaînes de réception.

Dans ce cas, chaque station-sonde de calibrage concernée constitue un émetteur de calibrage distant. Il est important de noter que cet émetteur de calibrage distant, contrairement à celui de l'art antérieur, n'est pas spécifique à l'opération de calibrage et n'occupe pas un emplacement fixe dans le champ.

Avantageusement, ladite demande d'émission d'au moins un signal de test précise au moins une caractéristique dudit au moins un signal de test.

De cette façon, le test effectué est adapté aux chaînes de pilotage en réception que l'on souhaite calibrer. En effet, toutes les stations de base ne sont pas identiques. En outre, une même station de base peut fonctionner selon plusieurs modes (par exemple "grand gain "et "petit gain"), chaque mode utilisant des chaînes de réception distinctes.

De façon avantageuse, ladite au moins une caractéristique dudit au moins un signal de test appartient au groupe comprenant : la fréquence d'émission, la puissance d'émission, l'heure (et éventuellement la date) de début d'émission, la durée d'émission et la forme d'onde d'émission.

Dans un mode de réalisation particulier du calibrage en réception selon l'invention, ledit procédé comprend les étapes suivantes :
- ladite demande d'émission d'au moins un signal de test est diffusée par ladite station de base et permet de sélectionner, selon au moins un critère de sélection prédéterminé, une pluralité de stations-sondes de calibrage ;
- en vue de la réception des signaux de test émis par ladite pluralité de stations-sondes de calibrage sélectionnées, ledit réseau d'antennes actives est commandé de façon à créer un faisceau de réception de forme prédéterminée de référence ;
- la répartition angulaire des signaux de test reçus de ladite pluralité de stations-sondes de calibrage sélectionnées permet d'estimer, par une approche statistique, la forme réelle du faisceau de réception créé par ledit réseau d'antennes actives ;
- on compare les formes de référence et estimée du faisceau de réception créé par ledit réseau d'antennes actives ;
- en fonction du résultat de ladite comparaison, la station de base détermine le calibrage à effectuer sur les chaînes de réception.

Ce mode de réalisation particulier du calibrage en réception repose donc sur une approche statistique, ce qui suppose que les stations-sonde de calibrage soient sensiblement équiréparties et en densité suffisante.

Dans le cas du calibrage des chaînes d'émission, le procédé comprend, dans un premier mode de réalisation avantageux, les étapes suivantes, pour une station-sonde de calibrage donnée :
- la station de base transmet à la station-sonde de calibrage d'une part une première demande de mesure au cours d'une première période prédéterminée, et d'autre part une seconde demande de mesure au cours d'une seconde période prédéterminée ;
- la station de base émet un premier signal de test prédéterminé pendant ladite première période prédéterminée, ledit réseau d'antennes actives étant commandé de façon à assurer une émission sensiblement homogène dans la zone où est supposée être ladite station-sonde de calibrage ;
- la station-sonde de calibrage effectue au moins une première mesure du premier signal de test reçu, et envoie à la station de base une première réponse contenant ladite au moins une première mesure ;
- la station de base reçoit puis traite ladite première réponse, de façon à en déduire l'angle d'arrivée associé à la station-sonde de calibrage ;
- la station de base émet un second signal de test prédéterminé pendant ladite seconde période prédéterminée, ledit réseau d'antennes actives étant commandé de façon à créer un faisceau d'émission qui peut être fonction dudit angle d'arrivée déduit du traitement de la première réponse reçue ;
- la station-sonde de calibrage effectue au moins une seconde mesure du second signal de test reçu au cours de ladite seconde période prédéterminée, et envoie à la station de base une seconde réponse contenant ladite au moins une seconde mesure ;
- la station de base reçoit puis traite ladite seconde réponse ;
- la station de base compare lesdites au moins une première et seconde mesures, et en fonction du résultat de la comparaison, détermine le calibrage à effectuer sur les chaînes d'émission.

Dans ce cas, chaque station-sonde de calibrage constitue un récepteur de calibrage distant. A nouveau, il est important de noter que ce récepteur de calibrage distant, contrairement à celui de l'art antérieur, n'est pas spécifique à l'opération de calibrage et n'occupe pas un emplacement fixe dans le champ.

Dans ce premier mode de réalisation, le calibrage des chaînes d'émission est donc déterminé en fonction de la comparaison de deux mesures effectuées avec différentes formes du faisceau d'émission.

Avantageusement, lors de ladite étape d'émission par la station de base du second signal de test, le faisceau d'émission créé par le réseau d'antennes actives vise à présenter un maximum de puissance sensiblement selon ledit angle d'arrivée déduit du traitement de la première réponse reçue, c'est-à-dire en direction supposée de la station-sonde de calibrage.

De cette façon, on déduit du rapport de mesure (entre les première et seconde mesures) le gain engendré par la formation du faisceau.

Selon une variante avantageuse, lors de ladite étape d'émission par la station de base du second signal de test, le faisceau d'émission créé par le réseau d'antennes actives vise à présenter un zéro de propagation sensiblement selon ledit angle d'arrivée déduit du traitement de la première réponse reçue, c'est-à-dire en direction supposée de la station-sonde de calibrage.

De cette façon, on déduit du rapport de mesure (entre les première et seconde mesures) l'efficacité du zéro de propagation engendré par la formation du faisceau.

Dans le cas du calibrage des chaînes d'émission, le procédé comprend, dans un second mode de réalisation avantageux, les étapes suivantes :
- la station de base diffuse une demande de mesure à effectuer au cours d'une période prédéterminée, ladite demande de mesure permettant en outre de sélectionner, selon au moins un critère de sélection prédéterminé, une pluralité de stations-sondes de calibrage ;
- la station de base émet un signal de test prédéterminé pendant ladite période prédéterminée, ledit réseau d'antennes actives étant commandé de façon à créer un faisceau d'émission de forme prédéterminée de référence ;
- chacune des stations-sondes de calibrage sélectionnées effectue au moins une mesure du signal de test reçu, et envoie à la station de base une réponse contenant ladite au moins une mesure ;
- la répartition angulaire des réponses reçues de ladite pluralité de stations-sondes de calibrage sélectionnées permet d'estimer, par une approche statistique, la forme réelle du faisceau d'émission créé par ledit réseau d'antennes actives ;
- on compare les formes de référence et estimée du faisceau d'émission créé par ledit réseau d'antennes actives ;
- en fonction du résultat de ladite comparaison, la station de base détermine le calibrage à effectuer sur les chaînes d'émission.

Ce second mode de réalisation avantageux du calibrage en émission ne repose donc pas sur deux mesures successives par une même statio-sond de calibrage, mais sur une pluralité de mesures simultanées par une pluralité de stations-sondes de calibrage. En d'autres termes, il s'agit d'une approche statistique, ce qui suppose que les stations-sonde de calibrage soient sensiblement équiréparties et en densité suffisante.

Avantageusement, pour les modes de réalisation (en émission comme en réception) basés sur une approche statistique, ledit au moins un critère de sélection appartient au groupe comprenant :
- une information liée au numéro d'identification de la station mobile ;
- une information liée au niveau de puissance mesurée par la station mobile.

De façon préférentielle, pour ces mêmes modes de réalisation basés sur une approche statistique, ladite pluralité de stations-sondes de calibrage sélectionnées met en oeuvre une technique de gestion des collisions lors de ladite étape d'émission des signaux de test ou lors de ladite étape d'émission des réponses contenant les mesures.

L'invention concerne également une station mobile d'un système de radiocommunication numérique cellulaire du type à accès multiple à répartition spatiale, du type destinée à communiquer avec une station de base associée à une cellule dans laquelle se trouve ladite station mobile,
ladite station de base comprenant un réseau d'antennes actives piloté par des chaînes de réception et/ou d'émission permettant de créer dynamiquement des faisceaux de réception et/ou d'émission en direction de ladite station mobile,
caractérisée en ce que ladite station mobile comprend des moyens de réception et/ou d'émission d'au moins un signal de test permettant le calibrage desdites chaînes de réception et/ou d'émission, de façon à être utilisée, outre sa fonction classique, comme sonde de calibrage.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un organigramme simplifié d'un premier mode de réalisation particulier du procédé selon l'invention dans le cas du calibrage des chaînes de réception ;
- la figure 2 présente un organigramme simplifié d'un second mode de réalisation particulier du procédé selon l'invention dans le cas du calibrage des chaînes de réception ;
- la figure 3 présente un organigramme simplifié d'un premier mode de réalisation particulier du procédé selon l'invention dans le cas du calibrage des chaînes d'émission ; et
- la figure 4 présente un organigramme simplifié d'un second mode de réalisation particulier du procédé selon l'invention dans le cas du calibrage des chaînes d'émission.

L'invention concerne donc un procédé de calibrage des chaînes de réception et des chaînes d'émission pilotant un réseau d'antennes actives d'une station de base d'un système de radiocommunication numérique cellulaire du type SDMA.

Selon l'invention, une ou plusieurs stations mobiles présentes dans la cellule courante sont utilisées, outre leur fonction classique, comme sonde de calibrage. A cet effet, ces stations mobiles, ou "stations-sondes de calibrage", comprennent des moyens de réception et/ou d'émission de signaux de test permettant le calibrage des chaînes de réception et/ou d'émission.

Il est clair qu'une station-sonde de calibrage peut être utilisée soit uniquement pour l'un des deux types de calibrage (des chaînes de réception ou des chaînes d'émission), soit pour les deux.

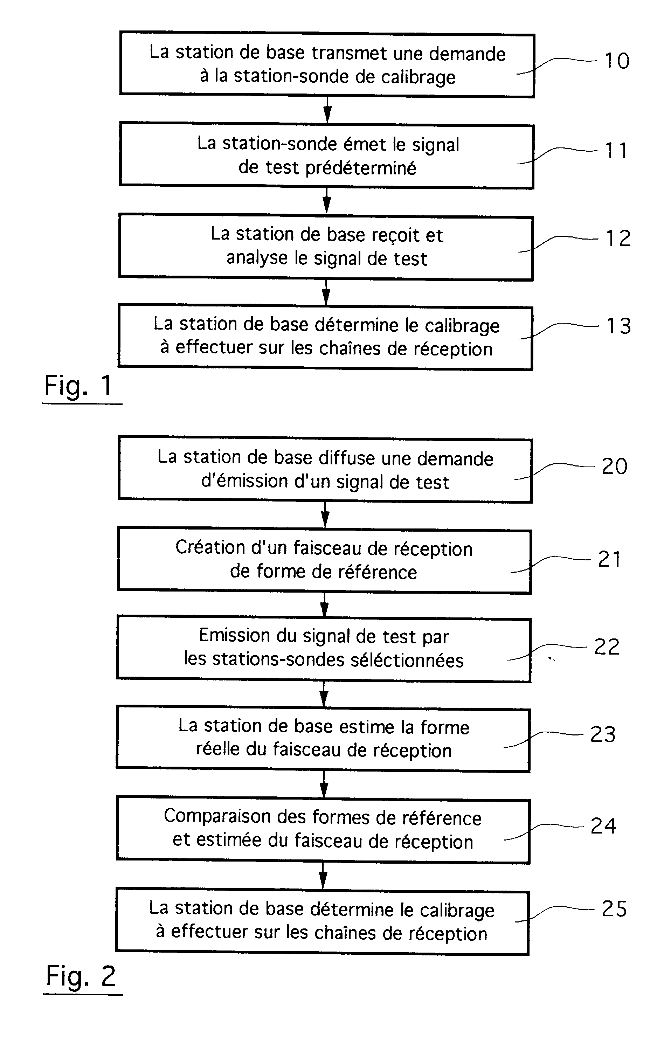

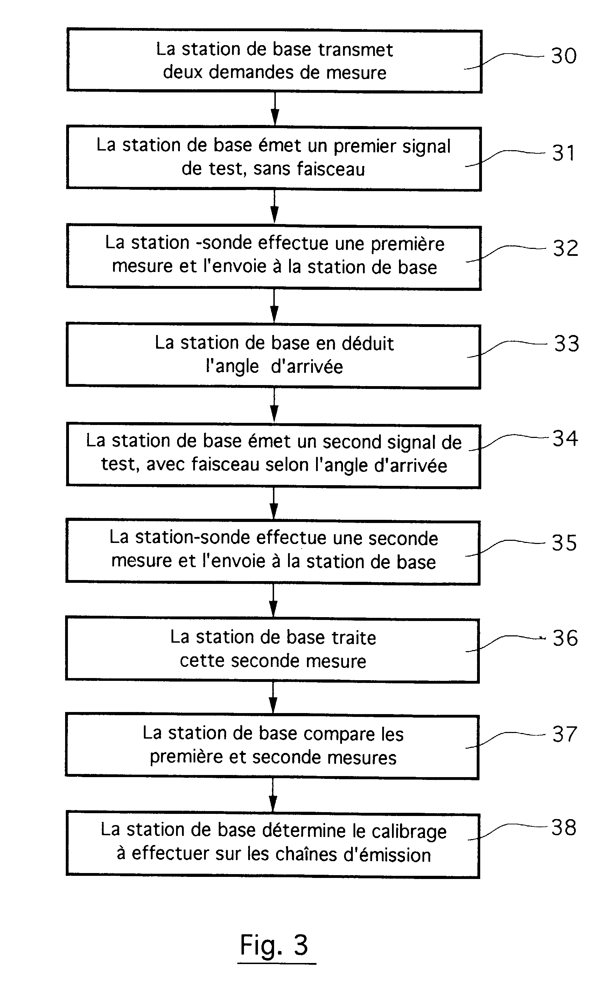

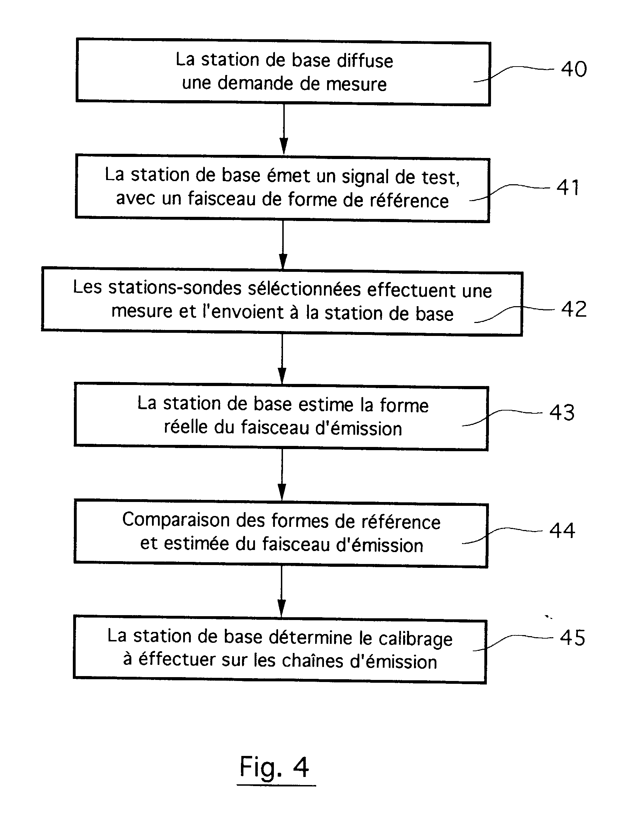

Dans la suite de la description, on présente tout d'abord, en relation avec les organigrammes des figures 1 et 2, un premier puis un second mode de réalisation particulier du procédé selon l'invention dans le cas du calibrage des chaînes de réception. Ensuite, en relation avec les organigrammes des figures 3 et 4, on présente un premier puis un second mode de réalisation particulier du procédé selon l'invention dans le cas du calibrage des chaînes d'émission.

Dans le premier mode de réalisation du calibrage des chaînes de réception (cf Fig. 1), le procédé selon l'invention comprend les étapes suivantes :
- la station de base transmet (10) à une station-sonde de calibrage une demande d'émission d'un signal de test prédéterminé ;
- à la réception de cette demande d'émission, la station-sonde de calibrage émet (11), comme demandé, le signal de test prédéterminé ;
- la station de base reçoit et analyse (12) le signal de test ;
- en fonction de l'analyse du signal de test, la station de base détermine (13) le calibrage à effectuer sur les chaînes de réception.

Afin d'améliorer la qualité du calibrage effectué, les étapes 10 à 12 de ce procédé peuvent être réitérées avec plusieurs stations-sondes de calibrage.

La demande transmise par la station de base à la station-sonde de calibrage peut préciser certaines caractéristiques du signal de test que la station-sonde de calibrage doit émettre en retour. De façon non exhaustive, il peut s'agir de toutes ou certaines des caractéristiques suivantes : la fréquence d'émission, la puissance d'émission, l'heure (et éventuellement la date) de début d'émission, la durée d'émission, la forme d'onde d'émission, etc.

On peut également prévoir, dans ce premier mode de réalisation comme dans le second décrit ci-dessous, que la demande transmise par la station de base à chaque station-sonde de calibrage porte sur l'émission de plusieurs signaux de test prédéterminés. Dans ce cas, l'analyse effectuée à l'étape référencée 12 porte sur plusieurs signaux de test reçus.

Dans le second mode de réalisation du calibrage des chaînes de réception (cf Fig.2), le procédé selon l'invention comprend les étapes suivantes :
- la station de base diffuse (20) une demande d'émission d'un signal de test. Cette demande, bien que reçue par toutes les stations mobiles présentes dans la cellule, peut ne concerner que certaines d'entre elles. En effet, la demande peut être telle qu'elle permet de sélectionner certaines stations-sondes de calibrage, par exemple en fonction du numéro d'identification (par exemple pair ou impair) ou du niveau de puissance mesurée par chaque station mobile (par exemple entre -80 et -70 dBm) ;
- en vue de la réception des signaux de test émis par la pluralité de stations-sondes de calibrage sélectionnées, le réseau d'antennes actives est commandé (21) de façon à créer un faisceau de réception de forme prédéterminée, dite de référence (ou idéale) ;
- à la réception de la demande d'émission, chaque station-sonde de calibrage sélectionnée émet (22), comme demandé, le signal de test prédéterminé. Lors de cette étape d'émission, une technique de gestion des collisions (par exemple de Aloha) peut être mise en oeuvre ;
- la station de base reçoit et analyse (23) les signaux de test émis par les stations-sondes de calibrage sélectionnées. La répartition angulaire de ces signaux de test reçus permet d'estimer, par une approche statistique, la forme réelle du faisceau de réception créé par le réseau d'antennes actives. On construit par exemple un histogramme présentant le nombre de signaux de test reçus pour différents angles de réception ;
- la station de base (ou tout autre élément du système) compare (24) les formes de référence et estimée du faisceau de réception créé par le réseau d'antennes actives ;
- en fonction du résultat de cette comparaison, la station de base détermine (25) le calibrage à effectuer sur les chaînes de réception (avec comme objectif l'égalité entre la forme réelle et la forme de référence).

Afin d'améliorer la qualité du calibrage en réception effectué, les étapes 20 à 25 de ce procédé de calibrage peuvent être réitérées. Le fait que le procédé de l'invention peut être du type itératif est également vrai pour le procédé de calibrage en réception selon le premier mode de réalisation présenté ci-dessus (cf Fig. 1), ainsi que pour les procédés de calibrage en émission présentés par la suite (cf Fig.3 et 4).

Dans le premier mode de réalisation du calibrage des chaînes d'émission (cf Fig.3), le procédé selon l'invention comprend les étapes suivantes :
- la station de base transmet (30) deux demandes de mesure à une station-sonde de calibrage. La première demande vise à faire effectuer par la station-sonde de calibrage une première mesure, au cours d'une première période prédéterminée. La seconde demande vise à faire effectuer par la station-sonde de calibrage une seconde mesure, au cours d'une seconde période prédéterminée. Il est clair que ces première et seconde demandes peuvent être émises simultanément ou successivement ;
- la station de base émet (31) un premier signal de test prédéterminé pendant la première période prédéterminée. Pendant cette émission, le réseau d'antennes actives est commandé de façon à assurer une émission sensiblement homogène dans la zone où est supposée être la station-sonde de calibrage. En d'autres termes, on ne crée pas de faisceau ;
- la station-sonde de calibrage effectue (32), conformément à la première demande préalablement reçue, une première mesure du premier signal de test reçu, et envoie à la station de base une première réponse contenant cette première mesure ;
- la station de base reçoit puis traite (33) la première réponse, de façon à en déduire l'angle d'arrivée associé à la station-sonde de calibrage ;
- la station de base émet (34) un second signal de test prédéterminé pendant la seconde période prédéterminée. Pendant cette émission, le réseau d'antennes actives est commandé de façon à créer un faisceau d'émission fonction de l'angle d'arrivée déduit du traitement de la première réponse reçue ;
- la station-sonde de calibrage effectue (35), conformément à la seconde demande préalablement reçue, une seconde mesure du second signal de test reçu au cours de la seconde période prédéterminée, et envoie à la station de base une seconde réponse contenant cette seconde mesure ;
- la station de base reçoit puis traite (36) la seconde réponse ;
- la station de base compare (37) les première et seconde mesures, et en fonction du résultat de la comparaison, détermine (38) le calibrage à effectuer sur les chaînes d'émission.

Lors de l'étape d'émission par la station de base du second signal de test, le faisceau d'émission créé par le réseau d'antennes actives vise à présenter un maximum de puissance (ou, selon une variante, un zéro de propagation) sensiblement selon l'angle d'arrivée déduit du traitement de la première réponse reçue, c'est-à-dire en direction supposée de la station-sonde de calibrage.

On peut également prévoir que la station-sonde de calibrage effectue plusieurs premières et/ou secondes mesures. Dans ce cas, le traitement effectué à l'étape référencée 33 peut porter sur une ou plusieurs première(s) réponse(s) contenant les différentes premières mesures. De même, le traitement effectué à l'étape référencée 36 peut alors porter sur une ou plusieurs seconde(s) réponse(s) contenant les différentes secondes mesures.

Dans le second mode de réalisation du calibrage des chaînes d'émission (cf Fig.4), le procédé selon l'invention comprend les étapes suivantes :
- la station de base diffuse (40) une demande de mesure à effectuer au cours d'une période prédéterminée. Cette demande, bien que reçue par toutes les stations mobiles présentes dans la cellule, peut ne concerner que certaines d'entre elles. En effet, la demande peut être telle qu'elle permet de sélectionner certaines stations-sondes de calibrage, par exemple en fonction du numéro d'identification (par exemple pair ou impair) ou du niveau de puissance mesurée par chaque station mobile (par exemple entre -80 et -70 dBm) ;
- la station de base émet (41) un signal de test prédéterminé pendant la période prédéterminée. Pendant cette émission, le réseau d'antennes actives est commandé de façon à créer un faisceau d'émission de forme prédéterminée de référence ;
- chacune des stations-sondes de calibrage sélectionnées effectue (42) une mesure du signal de test reçu, et envoie à la station de base une réponse contenant cette mesure. Lors de cette étape d'envoi de réponses par les stations-sondes de calibrage sélectionnées, une technique de gestion des collisions (par exemple de type Aloha) peut être mise en oeuvre, la station de base indiquant aux mobiles-sondes par un message de réponse particulier (ou par l'absence d'un tel message) qu'il y a eu collision ;
- la station de base reçoit et analyse (43) les réponses reçues des différentes stations-sondes de calibrage sélectionnées. La répartition angulaire de ces réponses permet d'estimer, par une approche statistique (déjà discutée dans le cas du calibrage en réception), la forme réelle du faisceau d'émission créé par le réseau d'antennes actives ;
- la station de base (ou tout autre élément du système) compare (44) les formes de référence et estimée du faisceau d'émission créé par le réseau d'antennes actives ;
- en fonction du résultat de la comparaison, la station de base détermine (45) le calibrage à effectuer sur les chaînes d'émission.

## Revendications

1. Procédé de calibrage de chaînes de réception et/ou d'émission pilotant un réseau d'antennes actives, ledit réseau d'antennes actives étant compris dans une station de base d'un système de radiocommunication numérique cellulaire du type à accès multiple à répartition spatiale (SDMA), et permettant de créer dynamiquement des faisceaux de réception et/ou d'émission en direction de stations mobiles présentes dans la cellule, dite cellule courante, associée à ladite station de base,
caractérisé en ce qu'au moins une des stations mobiles présentes dans la cellule courante, dite station-sonde de calibrage, est utilisée, outre sa fonction classique, comme sonde de calibrage, de façon à recevoir et/ou émettre au moins un signal de test permettant ledit calibrage desdites chaînes de réception et/ou d'émission.

2. Procédé selon la revendication 1, caractérisé en ce qu'il est du type itératif, de façon à améliorer par itérations successives la précision dudit calibrage des chaînes de réception et/ou d'émission.

3. Procédé selon l'une quelconque des revendications 1 et 2, caractérisé en ce que, dans le cas du calibrage des chaînes de réception, ledit procédé comprend les étapes suivantes :
- la station de base transmet (10) à au moins une station-sonde de calibrage une demande d'émission d'au moins un signal de test prédéterminé ;
- à la réception de ladite demande d'émission, chaque station-sonde de calibrage concernée émet (11) ledit au moins un signal de test ;
- la station de base reçoit et analyse (12) ledit au moins un signal de test ;
- en fonction de l'analyse dudit au moins un signal de test, la station de base détermine (13) le calibrage à effectuer sur les chaînes de réception.

4. Procédé selon la revendication 3, caractérisé en ce que ladite demande d'émission d'au moins un signal de test précise au moins une caractéristique dudit au moins un signal de test.

5. Procédé selon la revendication 4, caractérisé en ce que ladite au moins une caractéristique dudit au moins un signal de test appartient au groupe comprenant :
- la fréquence d'émission ;
- la puissance d'émission ;
- l'heure, et éventuellement la date, de début d'émission ;
- la durée d'émission ;
- la forme d'onde d'émission.

6. Procédé selon l'une quelconque des revendications 3 à 5, caractérisé en ce qu'il comprend les étapes suivantes :
- ladite demande d'émission d'au moins un signal de test est diffusée (20) par ladite station de base et permet de sélectionner, selon au moins un critère de sélection prédéterminé, une pluralité de stations-sondes de calibrage ;
- en vue de la réception des signaux de test émis par ladite pluralité de stations-sondes de calibrage sélectionnées, ledit réseau d'antennes actives est commandé (21) de façon à créer un faisceau de réception de forme prédéterminée de référence;
- la répartition angulaire des signaux de test reçus (22) de ladite pluralité de stations-sondes de calibrage sélectionnées permet d'estimer (23), par une approche statistique, la forme réelle du faisceau de réception créé par ledit réseau d'antennes actives ;
- on compare (24) les formes de référence et estimée du faisceau de réception créé par ledit réseau d'antennes actives ;
- en fonction du résultat de ladite comparaison, la station de base détermine (25) le calibrage à effectuer sur les chaînes de réception.

7. Procédé selon l'une quelconque des revendications 1 et 2, caractérisé en ce que, dans le cas du calibrage des chaînes d'émission, ledit procédé comprend les étapes suivantes, pour une station-sonde de calibrage donnée :
- la station de base transmet (30) à la station-sonde de calibrage d'une part une première demande de mesure au cours d'une première période prédéterminée, et d'autre part une seconde demande de mesure au cours d'une seconde période prédéterminée ;
- la station de base émet (31) un premier signal de test prédéterminé pendant ladite première période prédéterminée, ledit réseau d'antennes actives étant commandé de façon à assurer une émission sensiblement homogène dans la zone où est supposée être ladite station-sonde de calibrage ;
- la station-sonde de calibrage effectue (32) au moins une première mesure du premier signal de test reçu, et envoie à la station de base une première réponse contenant ladite au moins une première mesure ;
- la station de base reçoit puis traite (33) ladite première réponse, de façon à en déduire l'angle d'arrivée associé à la station-sonde de calibrage ;
- la station de base émet (34) un second signal de test prédéterminé pendant ladite seconde période prédéterminée, ledit réseau d'antennes actives étant commandé de façon à créer un faisceau d'émission qui peut être fonction dudit angle d'arrivée déduit du traitement de la première réponse reçue ;
- la station-sonde de calibrage effectue (35) au moins une seconde mesure du second signal de test reçu au cours de ladite seconde période prédéterminée, et envoie à la station de base une seconde réponse contenant ladite au moins une seconde mesure ;
- la station de base reçoit puis traite (36) ladite seconde réponse ;
- la station de base compare (37) lesdites au moins une première et seconde mesures, et en fonction du résultat de la comparaison, détermine (38) le calibrage à effectuer sur les chaînes d'émission.

8. Procédé selon la revendication 7, caractérisé en ce que, lors de ladite étape (34) d'émission par la station de base du second signal de test, le faisceau d'émission créé par le réseau d'antennes actives vise à présenter un maximum de puissance sensiblement selon ledit angle d'arrivée déduit du traitement de la première réponse reçue, c'est-à-dire en direction supposée de la station-sonde de calibrage.

9. Procédé selon la revendication 7, caractérisé en ce que, lors de ladite étape (34) d'émission par la station de base du second signal de test, le faisceau d'émission créé par le réseau d'antennes actives vise à présenter un zéro de propagation sensiblement selon ledit angle d'arrivée déduit du traitement de la première réponse reçue, c'est-à-dire en direction supposée de la station-sonde de calibrage.

10. Procédé selon l'une quelconque des revendications 1 et 2, caractérisé en ce que, dans le cas du calibrage des chaînes d'émission, ledit procédé comprend les étapes suivantes :
- la station de base diffuse (40) une demande de mesure à effectuer au cours d'une période prédéterminée, ladite demande de mesure permettant en outre de sélectionner, selon au moins un critère de sélection prédéterminé, une pluralité de stations-sondes de calibrage ;
- la station de base émet (41) un signal de test prédéterminé pendant ladite période prédéterminée, ledit réseau d'antennes actives étant commandé de façon à créer un faisceau d'émission de forme prédéterminée de référence ;
- chacune des stations-sondes de calibrage sélectionnées effectue (42) au moins une mesure du signal de test reçu, et envoie à la station de base une réponse contenant ladite au moins une mesure ;
- la répartition angulaire des réponses reçues de ladite pluralité de stations-sondes de calibrage sélectionnées permet d'estimer (43), par une approche statistique, la forme réelle du faisceau d'émission créé par ledit réseau d'antennes actives ;
- on compare (44) les formes de référence et estimée du faisceau d'émission créé par ledit réseau d'antennes actives ;
- en fonction du résultat de ladite comparaison, la station de base détermine (45) le calibrage à effectuer sur les chaînes d'émission.

11. Procédé selon l'une des revendications 6 et 10, caractérisé en ce que ledit au moins un critère de sélection appartient au groupe comprenant :
- une information liée au numéro d'identification de la station mobile ;
- une information liée au niveau de puissance mesurée par la station mobile.

12. Procédé selon l'une des revendications 6 et 10, caractérisé en ce que ladite pluralité de stations-sondes de calibrage sélectionnées met en oeuvre une technique de gestion des collisions lors de ladite étape (22) d'émission des signaux de test ou lors de ladite étape (42) d'émission des réponses contenant les mesures.

13. Station mobile d'un système de radiocommunication numérique cellulaire du type à accès multiple à répartition spatiale (SDMA), du type destinée à communiquer avec une station de base associée à une cellule dans laquelle se trouve ladite station mobile, ladite station de base comprenant un réseau d'antennes actives piloté par des chaînes de réception et/ou d'émission permettant de créer dynamiquement des faisceaux de réception et/ou d'émission en direction de ladite station mobile,
caractérisée en ce que ladite station mobile comprend des moyens de réception et/ou d'émission d'au moins un signal de test permettant le calibrage desdites chaînes de réception et/ou d'émission, de façon à être utilisée, outre sa fonction classique, comme sonde de calibrage.
